(19) **Europäisches Patentamt European Patent Office Office européen des brevets**

(11) **EP 4 752 265 A1**

(12) **EUROPEAN PATENT APPLICATION**
published in accordance with Art. 153(4) EPC

(43) Date of publication:
03.06.2026 Bulletin 2026/23

(21) Application number: 24844255.0

(22) Date of filing: 26.03.2024

(51) International Patent Classification (IPC):
$C25B\ 15/02\ ^{(2021.01)}$ $C25B\ 15/023\ ^{(2021.01)}$
$C25B\ 1/02\ ^{(2006.01)}$ $C25B\ 9/70\ ^{(2021.01)}$

(52) Cooperative Patent Classification (CPC):
Y02E 60/36

(86) International application number:
PCT/CN2024/083696

(87) International publication number:
WO 2025/020558 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.07.2023 CN 202310919709

(71) Applicant: SUNGROW HYDROGEN SCI. & TECH.
CO., LTD
Hefei, Anhui 230088 (CN)

(72) Inventors:
• LI, Jiangsong
  Hefei, Anhui 230088 (CN)
• SUN, Longlin
  Hefei, Anhui 230088 (CN)
• ZHANG, Can
  Hefei, Anhui 230088 (CN)
• YANG, Xiaowei
  Hefei, Anhui 230088 (CN)

(74) Representative: Epping - Hermann - Fischer
Patentanwaltsgesellschaft mbH
Schloßschmidstraße 5
80639 München (DE)

(54) **CONTROL METHOD AND APPARATUS FOR HYDROGEN PRODUCTION SYSTEM**

(57) A control method and apparatus for a hydrogen production system. The method comprises: for each electrolytic cell, performing evaluation to obtain energy efficiencies of the electrolytic cell under load currents; for each electrolytic cell, converting the energy efficiencies of the electrolytic cell under the load currents into an energy efficiency value of the electrolytic cell; and ranking the electrolytic cells in descending order according to the energy efficiency values of the electrolytic cells, and performing power distribution on the electrolytic cells on the basis of the ranking. In the present solution, current efficiencies corresponding to load currents are obtained on the basis of bypass currents under the load currents, energy efficiencies corresponding to the load currents are obtained on the basis of the current efficiencies and the voltage efficiencies, the energy efficiencies are converted into energy efficiency values, and power distribution is performed on electrolytic cells on the basis of the energy efficiency values, thereby achieving the purpose of controlling the power distribution for electrolytic cells in a hydrogen production system on the basis of accurate energy efficiencies of the electrolytic cells.

| Evaluate, for each of the multiple electrolyzers, energy efficiencies of the electrolyzer at various load currents | S301 |
| Convert, for each of the multiple electrolyzers, the energy efficiencies of the electrolyzer at various load currents into an energy efficiency value of the electrolyzer | S302 |
| Rank the multiple electrolyzers in a descending order based on energy efficiency values of the multiple electrolyzers, and distribute power to the electrolyzers based on the ranking | S303 |

**FIG. 3**

## Description

The present application claims the priority to Chinese Patent Application No. 202310919709.0, titled "CONTROL METHOD AND APPARATUS FOR HYDROGEN PRODUCTION SYSTEM", filed on July 24, 2023 with the China National Intellectual Property Administration, which is incorporated herein by reference in its entirety.

## FIELD

The present disclosure relates to the field of control technology, and in particular to a method and an apparatus for controlling a hydrogen production system.

## BACKGROUND

As the demand for hydrogen energy continues to increase and the levelized cost of energy (LCOE) for renewable energy sources continues to decline, large-scale hydrogen production applications based on renewable energy are becoming increasingly widespread.

In related hydrogen production systems, power distribution among electrolyzers is performed by using an equal allocation method that fails to consider individual performance characteristics of each of the electrolyzers. Alternatively, voltage efficiency of an electrolyzer is employed to represent energy efficiency of the electrolyzer and power distribution is performed based on the energy efficiency. However, due to the presence of a shunt current in the electrolyzer, the voltage efficiency alone cannot accurately reflect an overall energy efficiency of the electrolyzer. Consequently, it is impossible to control the power distribution among the electrolyzers in the hydrogen production system based on the accurate energy efficiency of the electrolyzer.

Therefore, how to accurately evaluate energy efficiencies of electrolyzers and perform power distribution among electrolyzers based on such energy efficiencies is an issue to be addressed.

## SUMMARY

In view of this, a method and an apparatus for controlling a hydrogen production system is provided according to embodiments of the present disclosure, to achieve an objective of accurately evaluation and power distribution among electrolyzers based on the energy efficiencies.

In order to achieve above objective, technical solutions are provided according to the embodiments of the present disclosure as follows.

In a first aspect, a method for controlling a hydrogen production system is provided according to embodiments of the present disclosure. The method is applied to a hydrogen production system including multiple electrolyzers. The method includes:

  evaluating, for each of the multiple electrolyzers, energy efficiencies of the electrolyzer at various load currents;

  converting, for each of the multiple electrolyzers, the energy efficiencies of the electrolyzer at various load currents into an energy efficiency value of the electrolyzer; and

  ranking the multiple electrolyzers in a descending order based on energy efficiency values of the multiple electrolyzers, and perform power distribution among the multiple electrolyzers based on the ranking.

In an embodiment, the evaluating, for each of the multiple electrolyzers, energy efficiencies of the electrolyzer at various load currents includes:

  for each of the multiple electrolyzers, detecting current efficiencies of the electrolyzer at various load currents and obtaining voltage efficiencies of the electrolyzer; and

  evaluating the energy efficiencies of the electrolyzer based on the current efficiencies and the voltage efficiencies.

In an embodiment, for each of the multiple electrolyzers, the detecting current efficiencies of the electrolyzer at various load currents and obtaining voltage efficiencies of the electrolyzer includes:
for each of the multiple electrolyzers, obtaining shunt currents flowing through a shunt circuit of the electrolyzer at various load currents, determining a ratio of each of the shunt currents to a load current corresponding to the shunt current as the current efficiency for the load current, and obtaining a voltage efficiency of the electrolyzer.

In an embodiment, converting, for each of the multiple electrolyzers, the energy efficiencies of the electrolyzer at various load currents into an energy efficiency value of the electrolyzer includes:
performing, for each of the multiple electrolyzers, weighted processing or averaging processing on the energy efficiencies of the electrolyzer at various load currents to obtain the energy efficiency value of the electrolyzer.

In an embodiment, the method further includes:
controlling, in response to receiving a hydrogen production command, a currently non-operational electrolyzer that is ranked foremost of the multiple electrolyzers according to a descending order of the energy efficiency values to start hydrogen production operation.

In a second aspect, an apparatus for controlling a hydrogen production system is provided according to embodiments of the present disclosure. The apparatus is applied to a hydrogen production system including multiple electrolyzers. The apparatus includes an evaluation unit, a conversion unit, and a distribution unit. The evaluation unit is configured to evaluate, for each of the multiple electrolyzers, energy efficiencies of the electrolyzer at various load currents. The conversion unit is configured to convert the energy efficiencies of the electrolyzer at various load currents into an energy efficiency value of the electrolyzer. The distribution unit is configured to rank the multiple electrolyzers in a descending order based on energy efficiency values of the multiple electrolyzers, and perform power distribution among the multiple electrolyzers based on the ranking.

In an embodiment, the evaluation unit includes a detection subunit and an evaluation subunit. The detection subunit is configured to, for each of the multiple electrolyzers, detect current efficiencies of the electrolyzer at various load currents, and obtain voltage efficiencies of the electrolyzer. The evaluation subunit is configured to evaluate the energy efficiencies of the electrolyzer based on the current efficiencies and the voltage efficiencies.

In an embodiment, the detection subunit is further configured to:
for each of the multiple electrolyzers, obtain shunt currents flowing through a shunt circuit of the electrolyzer at various load currents, determine a ratio of each of the shunt currents to a load current corresponding to the shunt current as the current efficiency for the load current, and obtain a voltage efficiency of the electrolyzer.

In an embodiment, the conversion unit is configured to:
performing, for each of the multiple electrolyzers, weighted processing or averaging processing on the energy efficiencies of the electrolyzer at various load currents to obtain the energy efficiency value of the electrolyzer.

In an embodiment, the apparatus further includes:
a response unit, configured to control, in response to receiving a hydrogen production command, a currently non-operational electrolyzer that is ranked foremost of the multiple electrolyzers according to a descending order of the energy efficiency values to start hydrogen production operation.

The method and the apparatus for controlling the hydrogen production system are provided according to the embodiments of the present disclosure. For each of multiple electrolyzers, energy efficiencies of the electrolyzer at various load currents are evaluated. For each of the multiple electrolyzers, the energy efficiencies of the electrolyzer at various load currents are converted into the energy efficiency value of the electrolyzer. The multiple electrolyzers are ranked in a descending order based on energy efficiency values of the multiple electrolyzers, and performing power distribution among the multiple electrolyzers based on the ranking. In this solution, the energy efficiencies corresponding to the various load currents are evaluated and converted into the energy efficiency value. Power distribution is performed among the multiple electrolyzers based on the energy efficiency value, to achieve the objective of controlling the power distribution among the multiple electrolyzers in the hydrogen production system based on accurate energy efficiencies of the multiple electrolyzers.

## BRIEF DESCRIPTION OF THE DRAWINGS

In order to more clearly illustrate the technical solutions in the embodiments of the present application or in the related technology, the accompanying drawings used in the description of the embodiments or the related technology will be briefly described hereinafter. It is apparent that the accompanying drawings in the following description are only some of the embodiments of the present application, and based on these accompanying drawings, other accompanying drawings may be obtained by those skilled in the art without creative efforts.

FIG. 1 is an architectural diagram of a hydrogen production system according to an embodiment of the present disclosure;

FIG. 2 is an equivalent electrical model diagram of an electrolyzer according to an embodiment of the present disclosure;

FIG. 3 is a flowchart of a method for controlling a hydrogen production system according to an embodiment of the present disclosure; and

FIG. 4 is a structural diagram of an apparatus for controlling a hydrogen production system according to an embodiment of the present disclosure.

## DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments in the present disclosure without any creative work fall within the protection scope of the present disclosure.

The terms "include", "comprise" or any other variants thereof are intended to be non-exclusive. Therefore, a process, method, article, or device including a series of elements includes not only these elements but also other elements that are not clearly enumerated, or further includes elements inherent in the process, method, article, or device. Unless expressively limited, the statement "including a..." does not exclude the case that other similar elements may exist in the process, the method, the article, or the device other than enumerated elements.

As can be seen from the background technology, in related hydrogen production systems, power distribution among electrolyzers is performed by using an equal allocation method that fails to consider individual performance characteristics of each of the electrolyzers. Alternatively, voltage efficiency of an electrolyzer is employed to represent energy efficiency of the electrolyzer and power distribution is performed based on the energy efficiency. However, due to the presence of a shunt current in the electrolyzer, the voltage efficiency alone cannot accurately reflect an overall energy efficiency of the electrolyzer. Consequently, it is impossible to control the power distribution among the electrolyzers in the hydrogen production system based on the accurate energy efficiency of the electrolyzer..

Therefore, a method for controlling a hydrogen production system is provided according to an embodiment of the present disclosure. In this solution, shunt currents at various load currents are obtained, current efficiencies corresponding to various load currents are obtained based on the shunt currents, energy efficiencies corresponding to various load currents are obtained based on the current efficiencies and voltage efficiencies, the energy efficiencies are converted into an energy efficiency value, and power distribution is performed among multiple electrolyzers based on the energy efficiency value, to achieve the objective of controlling the power distribution among the multiple electrolyzers in the hydrogen production system based on accurate energy efficiencies of the multiple electrolyzers.

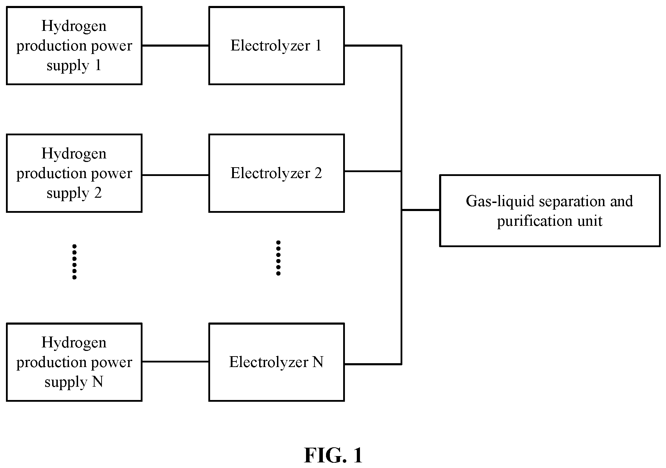

As shown in FIG. 1, an architectural diagram of a hydrogen production system according to an embodiment of the present disclosure is illustrated. The hydrogen production system includes: hydrogen production power supplies 1 to N, electrolyzers 1 to N, and a gas-liquid separation and purification unit.

The hydrogen production power supplies correspond to the electrolyzers one to one, and multiple electrolyzers share the same gas-liquid separation and purification unit. The hydrogen power supplies 1 to N are respectively connected to the corresponding electrolyzers 1 to N, and the electrolyzers 1 to N are connected to the gas-liquid separation and purification unit, where N is a positive integer.

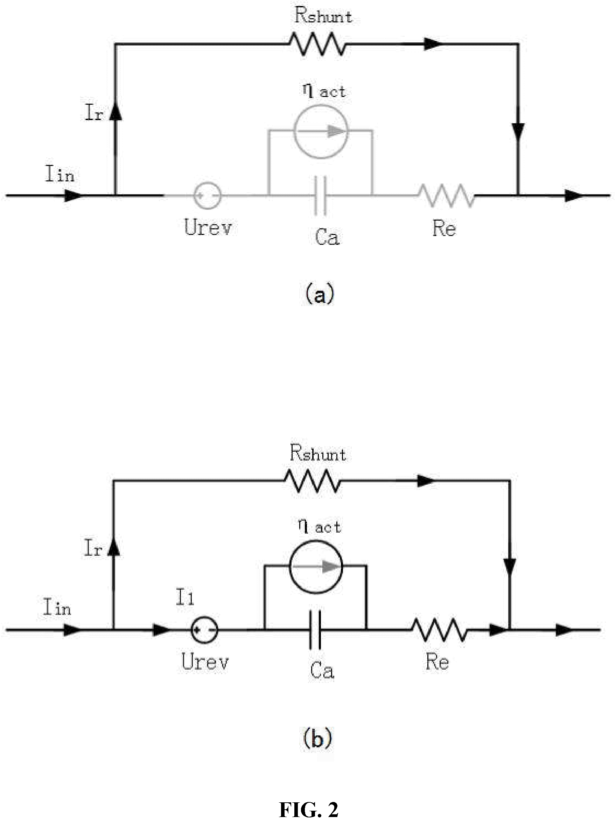

In an embodiment, an electrolyzer includes multiple cells. One cell is taken as an example, and FIG. 2 is an equivalent electrical model diagram of an electrolyzer according to an embodiment of the present disclosure. Subfigure a and subfigure b included in FIG. 2 respectively show two different operating conditions of the equivalent electrical model of a electrolyzer.

The electrolyzer includes a shunt circuit and an electrolytic circuit which are connected in parallel. $I_{in}$ represents an input current, $I_r$ represents a shunt current, and in subfigure b in FIG.2, $I_1$ represents an electrolytic current flowing through the electrolytic circuit.

In the shunt circuit, $R_{shunt}$ represents an electrolyte pathway impedance, that is, an equivalent shunt impedance of the shunt circuit.

In the electrolytic circuit, Urev represents a reversible electrolytic voltage, Re represents an equivalent impedance of a diaphragm electrode, ηact represents electrode overpotential, and Ca represents a double-layer capacitor. The reversible electrolytic voltage, the equivalent impedance of the diaphragm electrode, the electrode overpotential, and the electrical double-layer capacitor are equivalent to a single cell.

In an embodiment, an electrolytic circuit in an electrolyzer may include multiple cells. Assuming that the electrolyzer includes M cells, an electrolytic voltage of the electrolyzer is equal to $M \times$ Urev.

In an embodiment, the subfigure a in FIG. 2 illustrates a non-normal operating condition of the electrolyzer, that is, when a cell voltage is lower than the reversible electrolytic voltage Urev, the entire cell fails to be conducted, the input current $I_{in}$ flows entirely through the shunt impedance $R_{shunt}$, and the cell voltage refers to a shunt voltage drop.

In an embodiment, the subfigure b in FIG.2 illustrates a normal operating condition of the electrolyzer, that is, when the cell voltage is greater than the reversible electrolytic voltage Urev, the cell starts electrolysis and produces hydrogen normally. The input current $I_{in}$ is divided into a current $I_r$ flowing through the shunt circuit and a current $I_1$ flowing through the electrolysis circuit, respectively.

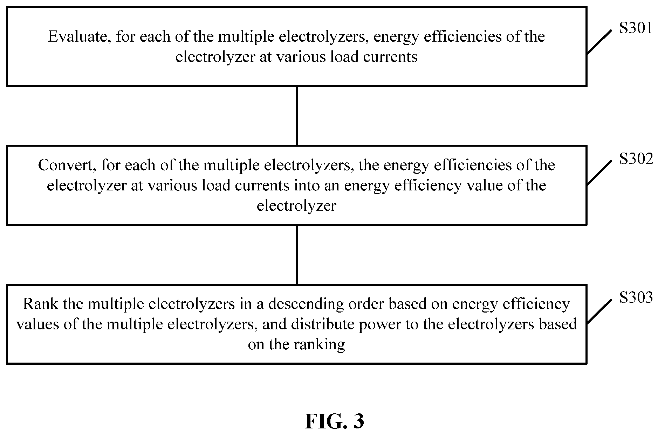

Based on the hydrogen production system shown in FIG. 1 and the equivalent electrical model of the electrolyzer shown in FIG. 2, FIG. 3 is a flowchart of a method for controlling a hydrogen production system according to an embodiment of the present disclosure. The method is applied to a hydrogen production system including multiple electrolyzers and the hydrogen production system shown in FIG. 1. The method mainly includes the following step S301 to step S302.

In step S301, for each of the multiple electrolyzers, energy efficiencies of the electrolyzer at various load currents are evaluated.

In step S301, for each of the multiple electrolyzers, current efficiencies of the electrolyzer at various load currents are detected, and voltage efficiencies of the electrolyzer at various load currents are obtained. The energy efficiencies of the electrolyzer are evaluated based on the current efficiencies and the voltage efficiencies. A specific evaluation method is detailed in step S1 to step S2.

In step S1, for each of the multiple electrolyzers, shunt currents flowing through a shunt circuit of the electrolyzer at various load currents are obtained, and a ratio of each of the shunt currents to a load current corresponding to the shunt current is determined as a current efficiency corresponding to the load current.

In an embodiment, before performing step S1, whether a status indicator such as pressure or temperature of the electrolyzer is in a normal operating condition is determined. In a case that the status indicator is in the normal operating condition, step S1 is performed. In a case that the status indicator is not in the normal operating condition, the status indicator such as the pressure or temperature of the electrolyzer is monitored continuously. When the status indicator restores to the normal operating condition, step S301 is performed.

In step S1, each of the various load currents refers to a total input current to the electrolyzer at a corresponding operating loads, that is, the input current $I_{in}$ shown in FIG. 2.

It should be noted that as the operating load increases from low to high, the load current gradually increases.

A specific implementation process of step S1 mainly includes the following step S11 to step S14.

In step S11, an equivalent shunt impedance for each of the multiple electrolyzers is detected.

In step S11, in order to detect the equivalent shunt impedance, the electrolyzer is required to be in an operating condition where the shunt circuit is conductive while the electrolytic circuit is non-conductive. This requires the voltage of the electrolyzer to be lower than the electrolytic voltage, that is the operating condition as shown in subfigure a in FIG.2.

In response of the electrolyzer including M cells, a sum of the reversible electrolytic voltages of all the M cells is equal to the electrolytic voltage of the electrolyzer. Therefore, the voltage of the electrolyzer is required to be less than M times the reversible electrolytic voltage, to enable the electrolyzer to be in the operating condition where the shunt circuit is conductive while the electrolytic circuit is non-conductive, thus implementing detection of the equivalent shunt impedance.

A detection method is described as follows. In response of a condition that the voltage of the electrolyzer is less than M times the reversible electrolytic voltage, IV scanning is performed to obtain an IV curve. The IV curve characterizes a corresponding relationship between an input voltage and an input current of the electrolyzer. Based on the corresponding relationship between the input voltage and the input current of the electrolyzer, the equivalent shunt impedance is calculated.

In an embodiment, a calculation method is described as follows. Any input voltage that is less than M times the reversible electrolytic voltage is divided by a corresponding input current. Alternatively, various input voltages that are less than M times the reversible electrolytic voltage are divided by corresponding input currents respectively, to obtain various equivalent shunt impedances, and then an average of the various equivalent shunt impedances is obtained.

In step S12, for each of the multiple electrolyzers, load voltages of the electrolyzer at various load currents are obtained.

In step S12, when different operating loads are applied to the electrolyzer and different load currents flow through the electrolyzer, the corresponding load voltages of the electrolyzer at various load currents are detected.

In step S13, shunt currents flowing through the shunt circuit of the electrolyzer at various load currents are obtained based on the load voltages and equivalent shunt impedances.

In step S13, since the shunt circuit is connected in parallel with the electrolytic circuit, the load voltage is equal to the voltage of the shunt circuit. The load voltages are divided by the equivalent shunt impedance, to obtain shunt currents corresponding to the load voltages. Based on a corresponding relationship between the load voltages and the load currents, the shunt currents flowing through the shunt circuit of the electrolyzer at various load currents are further obtained.

In step S14, a ratio of each of the shunt currents to a load current corresponding to the shunt current is determined as a current efficiency corresponding to the load current.

In step S2, the current efficiencies and the voltage efficiencies of the electrolyzer at various load currents are converted to obtain the energy efficiencies of the electrolyzer at various load currents.

In step S2, the voltage efficiency includes a ratio of a thermoneutral voltage to an average voltage of all the cells. The thermoneutral voltage is generally 1.48V, and the average voltage of all the cells is equals to a load voltage corresponding to a load current being divided by the number of the cells.

It should be noted that if the energy efficiency of the electrolyzer are represented by the voltage efficiency alone, tha is, the voltage efficiency are expressed as $\eta = U_{HHV} / U_{cell\_avg}$, where $U_{HHV}$ represents the thermoneutral voltage, generally 1.48V, and $U_{cell\_avg}$ represents the average voltage of all the cells of the electrolyzer. Due to the presence of a shunt current (a leakage current) of an actual electrolyzer, the current efficiency is less than 1 and varies with current density (that is, changes with the operating load of the electrolyzer). Consequently, a high voltage efficiency does not necessarily indicate a high energy efficiency of an electrolyzer. Therefore, both the voltage efficiency and the current efficiency are required to be considered to determine the energy efficiencies of the electrolyzer.

In step S2, a conversion process is described as follows.

A formula Energy Efficiency=Voltage Efficiency×Current Efficiency is used to perform conversion, that is, a product of the current efficiency and the voltage efficiency of the electrolyzer at a load current of the electrolyzer is determined as the energy efficiency of the electrolyzer at the load current.

In step S302, for each of the multiple electrolyzers, the energy efficiencies of the electrolyzer at various load currents are converted into an energy efficiency value of the electrolyzer.

In Step S302, a single electrolyzer corresponds to multiple energy efficiencies. These energy efficiencies are required to be converted into a single energy efficiency value uniquely corresponding the electrolyzer-that is, multiple energy efficiencies are converted into one energy efficiency value.

In the specific implementation of step S302, an average value of the energy efficiencies of the electrolyzer at various load currents are determined as the energy efficiency value of the electrolyzer.

For example, if the load current is expressed as a percentage, the current efficiency at a 30% load current is 60%, the current efficiency at a 50% load current is 70%, the current efficiency at a 70% load current is 90%, the current efficiency at a 90% load current is 88%, and the current efficiency at a 100% load current is 85%. The energy efficiency of the electrolyzer is expressed as in an average manner:

$$(60\% + 70\% + 90\% + 88\% + 85\%)/5 = 0.786$$

Alternatively, weighted processing is performed on the energy efficiencies of the electrolyzer at various load currents, to obtain the energy efficiency value of the electrolyzer.

In an embodiment, weights are set to different load currents. Weighted average calculation is performed based on the set weights to obtain the energy efficiency value of the electrolyzer.

In step S303, the multiple electrolyzers are ranked in a descending order based on energy efficiency values of the multiple electrolyzers, and power distribution is performed among the multiple electrolyzers based on the ranking.

In Step S303, the multiple electrolyzers are prioritized in a descending order based on energy efficiency values of the multiple electrolyzers. An electrolyzer with a high energy efficiency value, due to a great hydrogen production efficiency, is allocated more power to generate increased hydrogen.

In an embodiment, after the multiple electrolyzers are prioritized in a descending order based on energy efficiency values of the multiple electrolyzers, in response to receiving a hydrogen production command, a currently non-operational electrolyzer that is ranked foremost of the multiple electrolyzers according to the descending order of the energy efficiency values to start hydrogen production operation.

In an embodiment, after the multiple electrolyzers are prioritized in a descending order based on energy efficiency values of the multiple electrolyzers, an electrolyzer with a high priority operates preferentially and is configured with a long operating durations, while an electrolyzer with a low energy efficiency value has a lower operating priority and is configured with a shorter operating durations compared with the electrolyzer with the high priority. In this way, a balanced lifespan across all electrolyzers in a hydrogen production station is achieved, and consistency of operating lives for all the electrolyzers in the station is ensured.

Based on the method for controlling the hydrogen system provided according to the embodiment of the present disclosure, for each of the multiple electrolyzers, shunt currents flowing through a shunt circuit of the electrolyzer at various load currents are obtained, and a ratio of each of the shunt currents to a load current corresponding to the shunt current is determined as a current efficiency corresponding to the load current. Current efficiencies and voltage efficiencies of the electrolyzer at various load currents are converted to obtain energy efficiencies of the electrolyzer at various load currents. The energy efficiencies of the electrolyzer at various load currents are converted into an energy efficiency value of the electrolyzer. The multiple electrolyzers are ranked in a descending order based on energy efficiency values of the multiple electrolyzers, and power distribution is performed among the multiple electrolyzers based on the ranking. In the present solution, current efficiencies corresponding to various load currents are obtained based on the shunt currents at various load currents, energy efficiencies corresponding to various load currents are obtained based on the current efficiencies and the voltage efficiencies, the energy efficiencies are converted into the energy efficiency value, and power distribution is performed among the multiple electrolyzers based on energy efficiency values, thereby achieving the objective of controlling the power distribution among the multiple electrolyzers in the hydrogen production system based on accurate energy efficiencies of the multiple electrolyzers.

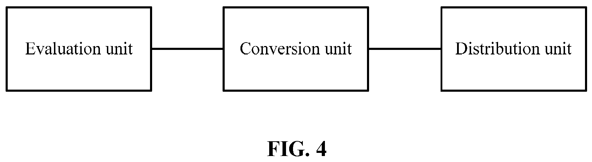

Based on the method for controlling the hydrogen system provided according to the embodiment of the present disclosure, FIG. 4 is a structural diagram of an apparatus for controlling a hydrogen production system according to an embodiment of the present disclosure. The apparatus is applied to a hydrogen production system including multiple electrolyzers and the hydrogen production system shown in FIG. 1. The apparatus includes an evaluation unit 401, a conversion unit 402, and a distribution unit 403.

The evaluation unit 401 is configured to evaluate, for each of the multiple electrolyzers, energy efficiencies of the electrolyzer at various load currents.

In an embodiment, the evaluation unit 401 includes a detection subunit and an evaluation subunit.

An acquisition module is configured for the detection subunit. The detection subunit is configured to, for each of the multiple electrolyzers, detect current efficiencies of the electrolyzer at various load currents, and obtain voltage efficiencies of the electrolyzer.

In an embodiment, the detection subunit includes a detection submodule, an acquisition submodule, a calculation submodule, and a ratio submodule.

The detection submodule is configured to detect an equivalent shunt impedance for each of the multiple electrolyzers.

The acquisition submodule is configured to acquire, for each of the multiple electrolyzers, load voltages of the electrolyzer at various load currents and obtain voltage efficiencies of the electrolyzer at various load currents.

The calculation submodule is configured to obtain shunt currents flowing through a shunt circuit of the electrolyzer at various load currents based on the load voltages and equivalent shunt impedances.

The ratio submodule is configured to determine a ratio of each of the shunt currents to a load current corresponding to the shunt current as a current efficiency corresponding to the load current.

In an embodiment, the detection submodule is configured to, for each of the multiple electrolyzers, in response of a condition that the voltage of the electrolyzer being less than the electrolytic voltage, a corresponding relationship between an input voltage and an input current of the electrolyzer is obtained through IV scanning, where the electrolytic voltage includes a sum of reversible electrolytic voltages of all the cells, and an equivalent shunt impedance is obtained based on an input voltage and an input current corresponding to the input voltage of the electrolyzer.

The evaluation subunit is configured to evaluate the energy efficiencies of the electrolyzer based on the current efficiencies and the voltage efficiencies.

In an embodiment, the evaluation subunit is configured to determine an average value of the energy efficiencies of the electrolyzer at various load currents as an energy efficiency value of the electrolyzer. Alternatively, weighted calculation is performed on the energy efficiencies of the electrolyzer at various load currents to obtain the energy efficiency value of the electrolyzer.

The voltage efficiency includes a ratio of a thermoneutral voltage to an average voltage of all the cells. The thermoneutral is generally 1.48V.

The conversion unit 402 is configured to, for each of the multiple electrolyzers, convert the energy efficiencies of the electrolyzer at various load currents into an energy efficiency value of the electrolyzer.

In an embodiment, for each of the multiple electrolyzers, weighted processing or averaging processing is performed on the energy efficiencies of the electrolyzer at various load currents to obtain the energy efficiency value of the electrolyzer.

The distribution unit 403 is configured to rank the multiple electrolyzers in a descending order based on energy efficiency values of the multiple electrolyzers, and perform power distribution among the multiple electrolyzers based on the ranking.

In an embodiment, the apparatus for controlling the hydrogen production system further includes: a response unit, and the response unit is configured to control, in response to receiving a hydrogen production command, a currently non-operational electrolyzer that is ranked foremost of the multiple electrolyzers according to a descending order of the energy efficiency values to start hydrogen production operation.

Based on the apparatus for controlling the hydrogen system provided according to the embodiment of the present disclosure, for each of the multiple electrolyzers, shunt currents flowing through a shunt circuit of the electrolyzer at various load currents are obtained, and a ratio of each of the shunt currents to a load current corresponding to the shunt current is determined as a current efficiency corresponding to the load current. Current efficiencies and voltage efficiencies of the electrolyzer at various load currents are converted to obtain energy efficiencies of the electrolyzer at various load currents. The energy efficiencies of the electrolyzer at various load currents are converted into an energy efficiency value of the electrolyzer. The multiple electrolyzers are ranked in a descending order based on energy efficiency values of the multiple electrolyzers, and power distribution is performed among the multiple electrolyzers based on the ranking. In the present solution, current efficiencies corresponding to various load currents are obtained based on the shunt currents at various load currents, energy efficiencies corresponding to various load currents are obtained based on the current efficiencies and the voltage efficiencies, the energy efficiencies are converted into the energy efficiency value, and power distribution is performed among the multiple electrolyzers based on energy efficiency values, to achieve the objective of controlling the power distribution among the multiple electrolyzers in the hydrogen production system based on accurate energy efficiencies of the multiple electrolyzers.

The embodiments are described in this specification in a progressive manner. Various embodiments may refer to each other for the same or similar parts, and each embodiment places emphasis on the difference from other embodiments. In particular, the system or system embodiments is basically similar to the method embodiments, and therefore is described relatively briefly. For relevant details, reference can be made to the corresponding description of the method embodiments. The system and system embodiments described above are only schematic, in which the units described as separate components may or may not be physically separated, and the components shown as units may or may not be physical units, that is, the components may be located in one place or distributed at multiple network units. Some or all of the modules may be selected as needed to achieve the objective of the solution of the embodiments. Those skilled in the art may understand and implement the solution without any creative effort.

Those skilled in the art may further appreciate that the units and algorithmic steps in the examples described according to the embodiments disclosed herein may be implemented in forms of electronic hardware, computer software or a combination of the both. In order to illustrate the interchangeability of the hardware and the software clearly, the components and the steps in the examples are described generally according to functions in the above description. Whether these functions are performed in hardware or software depends on the specific application and design constraints for the technical solution. Those skilled in the art may implement the described function in various manners for each specific application, however such implementation should not be considered beyond the scope of the present disclosure.

According to the above description of the disclosed embodiments, those skilled in the art can implement or practice the present disclosure. Various modifications to these embodiments are obvious to those skilled in the art, the general principles defined herein may be implemented in other embodiments without departing from the spirit or scope of the present disclosure. Therefore, the present disclosure should not be limited to the embodiments disclosed herein, but has the widest scope in accordance to the principles and the novel features disclosed herein.

**Claims**

1.  A method for controlling a hydrogen production system, applied to a hydrogen production system comprising a plurality of electrolyzers, **characterized in that** the method comprising:

    evaluating, for each of the plurality of electrolyzers, energy efficiencies of the electrolyzer at various load currents;
    converting, for each of the plurality of electrolyzers, the energy efficiencies of the electrolyzer at various load currents into an energy efficiency value of the electrolyzer; and
    ranking the plurality of electrolyzers in a descending order based on energy efficiency values of the plurality of electrolyzers, and performing power distribution among the plurality of electrolyzers based on the ranking.

2.  The method according to claim 1, wherein the evaluating, for each of the plurality of electrolyzers, energy efficiencies of the electrolyzer at various load currents comprises:

    for each of the plurality of electrolyzers, detecting current efficiencies of the electrolyzer at various load currents and obtaining voltage efficiencies of the electrolyzer; and
    evaluating the energy efficiencies of the electrolyzer based on the current efficiencies and the voltage efficiencies.

3.  The method according to claim 2, wherein for each of the plurality of electrolyzers, detecting current efficiencies of the electrolyzer at various load currents and obtaining voltage efficiencies of the electrolyzer comprises:
    for each of the plurality of electrolyzers, obtaining shunt currents flowing through a shunt circuit of the electrolyzer at various load currents, determining a ratio of each of the shunt currents to a load current corresponding to the shunt current as a current efficiency corresponding to the load current, and obtaining a voltage efficiency of the electrolyzer.

4.  The method according to claim 1, wherein converting, for each of the plurality of electrolyzers, the energy efficiencies of the electrolyzer at various load currents into an energy efficiency value of the electrolyzer comprises:
    performing, for each of the plurality of electrolyzers, weighted processing or averaging processing on the energy efficiencies of the electrolyzer at various load currents to obtain the energy efficiency value of the electrolyzer.

5.  The method according to any one of claims 1 to 4, further comprising:
    controlling, in response to receiving a hydrogen production command, a currently non-operational electrolyzer that is ranked foremost of the plurality of electrolyzers according to a descending order of the energy efficiency values to start hydrogen production operation.

6. An apparatus for controlling a hydrogen production system, applied to a hydrogen production system comprising plurality of electrolyzers, **characterized in that** the apparatus comprising:

an evaluation unit, configured to evaluate, for each of the plurality of electrolyzers, energy efficiencies of the electrolyzer at various load currents;
a conversion unit, configured to convert the energy efficiencies of the electrolyzer at various load currents into an energy efficiency value of the electrolyzer; and
a distribution unit, configured to rank the plurality of electrolyzers in a descending order based on energy efficiency values of the plurality of electrolyzers, and perform power distribution among the plurality of electrolyzers based on the ranking.

7. The apparatus according to claim 6, wherein the evaluation unit comprises:

a detection subunit, configured to, for each of the plurality of electrolyzers, detect current efficiencies of the electrolyzer at various load currents, and obtain voltage efficiencies of the electrolyzer; and
an evaluation subunit, configured to evaluate the energy efficiencies of the electrolyzer based on the current efficiencies and the voltage efficiencies.

8. The apparatus according to claim 7, wherein the detection unit is further configured to:
for each of the plurality of electrolyzers, obtain shunt currents flowing through a shunt circuit of the electrolyzer at various load currents, determine a ratio of each of the shunt currents to a load current corresponding to the shunt current as a current efficiency corresponding to the load current, and obtain a voltage efficiency of the electrolyzer.

9. The apparatus according to claim 6, wherein the conversion unit is further configured to:
performing, for each of the plurality of electrolyzers, weighted processing or average processing on the energy efficiencies of the electrolyzer at various load currents to obtain the energy efficiency value of the electrolyzer.

10. The apparatus according to any one of claims 6 to 9, further comprising:
a response unit, configured to control, in response to receiving a hydrogen production command, a currently non-operational electrolyzer that is ranked foremost of the plurality of electrolyzers according to a descending order of the energy efficiency values to start hydrogen production operation.

**FIG. 1**

(a)

(b)

**FIG. 2**

Evaluate, for each of the multiple electrolyzers, energy efficiencies of the electrolyzer at various load currents

S301

Convert, for each of the multiple electrolyzers, the energy efficiencies of the electrolyzer at various load currents into an energy efficiency value of the electrolyzer

S302

Rank the multiple electrolyzers in a descending order based on energy efficiency values of the multiple electrolyzers, and distribute power to the electrolyzers based on the ranking

S303

**FIG. 3**

| Evaluation unit | Conversion unit | Distribution unit |

**FIG. 4**

## INTERNATIONAL SEARCH REPORT

| International application No. |
| --- |
| **PCT/CN2024/083696** |

**A.    CLASSIFICATION OF SUBJECT MATTER**

C25B15/02(2021.01)i;  C25B15/023(2021.01)i;  C25B1/02(2006.01)i;  C25B9/70(2021.01)i

According to International Patent Classification (IPC) or to both national classification and IPC

**B.    FIELDS SEARCHED**

Minimum documentation searched (classification system followed by classification symbols)

IPC：C25B

Documentation searched other than minimum documentation to the extent that such documents are included in the fields searched

Electronic data base consulted during the international search (name of data base and, where practicable, search terms used)

VCN, CNTXT, ENTXTC, DWPI, ISI Web of Science: 等效电路, 等效阻抗, 电解, 电解槽, 电解电流, 电流效率, 电压效率, 分配, 功率, 功率分配, 能效, 能效分配, 排序, 旁路, 旁路电流, 平均, 热中性电压, Equivalent circuit, equivalent impedance, electrolysis, electrolyzer, tank, bath, current, current efficiency, voltage efficiency, distribution, power, power distribution, energy efficiency, sequencing, bypass, bypass current, average, thermoneutral voltage

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116905043 A (SUNSHINE HYDROGEN ENERGY TECHNOLOGY CO., LTD.) 20 October 2023 (2023-10-20)<br>see claims 1-10 | 1-10 |
| PX | CN 117248229 A (DALIAN INSTITUTE OF CHEMICAL PHYSICS, CHINESE ACADEMY OF SCIENCES) 19 December 2023 (2023-12-19)<br>see claims 9-10 | 1-10 |
| X | CN 116334691 A (WUHAN UNIVERSITY OF TECHNOLOGY et al.) 27 June 2023 (2023-06-27)<br>see description, paragraphs [0005-[0038] | 1-2, 4-7, 9-10 |
| Y | CN 116334691 A (WUHAN UNIVERSITY OF TECHNOLOGY et al.) 27 June 2023 (2023-06-27)<br>see description, paragraphs [0005]-[0025] | 3, 8 |
| Y | CN 102099507 A (NEXT HYDROGEN CORP.) 15 June 2011 (2011-06-15)<br>see description, paragraph [0050] | 3, 8 |

☑ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **04 July 2024** | **05 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/083696** |

### C.  DOCUMENTS CONSIDERED TO BE RELEVANT

| Category* | Citation of document, with indication, where appropriate, of the relevant passages | Relevant to claim No. |
|---|---|---|
| A | CN 114836790 A (SHUIMU MINGTUO HYDROGEN ENERGY TECHNOLOGY CO., LTD.) 02 August 2022 (2022-08-02)<br>    see entire document | 1-10 |
| A | WO 2013023733 A2 (THYSSENKRUPP UHDE GMBH et al.) 21 February 2013 (2013-02-21)<br>    see entire document | 1-10 |
| A | CN 115912345 A (SUNLIGHT HYDROGEN ENERGY TECHNOLOGY CO., LTD.) 04 April 2023 (2023-04-04)<br>    see entire document | 1-10 |
| PA | CN 117669448 A (SUNLIGHT HYDROGEN ENERGY TECHNOLOGY CO., LTD.) 08 March 2024 (2024-03-08)<br>    see entire document | 1-10 |

Form PCT/ISA/210 (second sheet) (July 2022)

EP 4 752 265 A1

## INTERNATIONAL SEARCH REPORT
### Information on patent family members

| International application No. |
| PCT/CN2024/083696 |

| Patent document cited in search report | | | Publication date (day/month/year) | Patent family member(s) | | | Publication date (day/month/year) |
|---|---|---|---|---|---|---|---|
| CN | 116905043 | A | 20 October 2023 | None | | | |
| CN | 117248229 | A | 19 December 2023 | None | | | |
| CN | 116334691 | A | 27 June 2023 | None | | | |
| CN | 102099507 | A | 15 June 2011 | CA | 2726677 | A1 | 21 January 2010 |
| | | | | CA | 2726677 | C | 12 August 2014 |
| | | | | WO | 2010006423 | A1 | 21 January 2010 |
| | | | | US | 2010012503 | A1 | 21 January 2010 |
| | | | | US | 8308917 | B2 | 13 November 2012 |
| | | | | EP | 2300640 | A1 | 30 March 2011 |
| | | | | EP | 2300640 | A4 | 25 June 2014 |
| | | | | EP | 2300640 | B1 | 23 September 2015 |
| | | | | CA | 2637865 | A1 | 15 January 2010 |
| | | | | US | 2013001070 | A1 | 03 January 2013 |
| | | | | US | 2013140171 | A1 | 06 June 2013 |
| | | | | US | 8864962 | B2 | 21 October 2014 |
| | | | | IN | 392327 | B | 25 March 2022 |
| | | | | CN | 102099507 | B | 03 September 2014 |
| CN | 114836790 | A | 02 August 2022 | None | | | |
| WO | 2013023733 | A2 | 21 February 2013 | DE | 102011110507 | A1 | 21 February 2013 |
| | | | | DE | 102011110507 | B4 | 08 September 2022 |
| | | | | WO | 2013023733 | A3 | 30 May 2013 |
| CN | 115912345 | A | 04 April 2023 | None | | | |
| CN | 117669448 | A | 08 March 2024 | None | | | |

Form PCT/ISA/210 (patent family annex) (July 2022)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310919709